# EUROPÄISCHE PATENTSCHRIFT

(11) **EP 1 220 200 B1**
(45) Veröffentlichungstag und Bekanntmachung des Hinweises auf die Patenterteilung: **24.09.2003**
(21) Anmeldenummer: 00127747.4
(22) Anmeldetag: 18.12.2000
(51) Int. Cl.: G10L 15/26, G10L 15/06

(54) **Verfahren und Anordnung zur sprecherunabhängigen Spracherkennung für ein Telekommunikations- bzw. Datenendgerät**
Method and system for speaker independent recognition for a telecommunication or data processing device
Procédé et dispositif pour la reconnaissance de la parole indépendente du locuteur, pour un appareil de télécommunication ou de données numériques

(43) Veröffentlichungstag der Anmeldung: 03.07.2002
(73) Patentinhaber: SIEMENS AKTIENGESELLSCHAFT, 80333 München (DE)
(72) Erfinder: Niemoeller, Meinrad, 83607 Holzkirchen (DE)

(56) Entgegenhaltungen:
- EP-A- 0 953 967
- EP-A- 1 047 046
- WO-A-97/37311
- DE-C- 19 751 123
- US-A- 5 131 045
- US-A- 6 078 885
- BESLING S: "A statistical approach to multilingual phonetic transcription" PHILIPS JOURNAL OF RESEARCH,NL,ELSEVIER, AMSTERDAM, Bd. 49, Nr. 4, 1995, Seiten 367-379, XP004000261 ISSN: 0165-5817
- TAJCHMAN G ET AL: "BUILDING MULTIPLE PRONUNCIATION MODELS FOR NOVEL WORDS USING EXPLORATORY COMPUTATIONAL PHONOLOGY" EUROPEAN CONFERENCE ON SPEECH COMMUNICATION AND TECHNOLOGY. (EUROSPEECH),ES,MADRID: GRAFICAS BRENS, Bd. CONF. 4, 18. September 1995 (1995-09-18), Seiten 2247-2250, XP000855158

## Beschreibung

Die Erfindung betrifft ein Verfahren zur sprecherunabhängigen Spracherkennung für ein Telekommunikations- bzw. Datenendgerät nach dem Oberbegriff des Anspruchs 1 sowie eine Anordnung zur Durchführung dieses Verfahrens.

Nachdem die Spracheingabe für Textprogramme sowie die Sprachsteuerung von Gerätefunktionen sich bei PCs seit Jahren bewährt und einen hohen Grad an Erkennungsgenauigkeit erreicht haben, werden sie seit kurzem verstärkt auch bei einfacheren Endgeräten von Telekommunikations- bzw. Datennetzen, insbesondere Mobiltelefonen und Handheld-PCs und PDAs (Personal Digital Assistants) eingesetzt. Entsprechende Geräte sind bereits auf dem Markt erhältlich. Die Sprachsteuerung bietet hier einen erhöhten Bedienkomfort bei der Aktivierung häufig benötigter Funktionen bzw. beim Wählen häufig benutzter Rufnummern.

Die Spracherkennung auf derartigen Endgeräten beruht in der Regel auf Algorithmen der sprecherabhängigen Spracherkennung. Bei diesen Verfahren muß der Wortschatz durch Einsprechen aller Worte seitens des Benutzers trainiert werden.

Im Gegensatz dazu erlauben sprecherunabhängige Spracherkennungsverfahren den sofortigen Einsatz ohne Initialisierung, den sogenannten Enrollment-Prozeß. Einfachere, relativ preiswerte Endgeräte ("Low-Cost"-Geräte) verfügen bereits über relativ leistungsfähige Mikrocontroller oder Mikroprozessoren mit hoher Rechenleistung, so daß für die nächsten Jahre eine Ablösung der unbequemeren sprecherabhängigen Spracherkennung bei derartigen Geräten durch die hinsichtlich der benötigten Verarbeitungsleistung aufwendigere sprecherunabhängige Spracherkennung zu erwarten steht. Diese hat im übrigen den Vorteil, daß der Wortschatz nicht a priori bekannt sein muß-was bestimmte Anwendungen überhaupt erst möglich macht.

Eine Erweiterung des Wortschatzes bei Verfahren der sprecherunabhängigen Spracherkennung erfolgt über die Generierung einer phonetischen Transkription aus einer orthografischen Repräsentation jedes neuen Wortes. Die neuen Worte werden also durch den Benutzer (beispielsweise mittels einer alphanumerischen Tastatur oder eines Touch-Screen) als Text eingegeben, und der Text wird anschließend in eine standardisierte Lautschrift der Phoneme in der jeweiligen Sprache abgebildet. Diese Repräsentation bildet dann die Grundlage weiterer Verarbeitungsschritte, bei denen die Phoneme in kleinere Segmente aufgeteilt und nach etablierten Algorithmen der Spracherkennung weiterverarbeitet, beispielsweise als Hidden-Markov-Zustände in einen Suchraum eines Hidden-Markov-Modells eingetragen werden.

Bei Sprachen wie Italienisch oder Spanisch ist die Umwandlung der Orthografie in eine phonetische Transkription im wesentlichen trivial, weil in diesen Sprachen im wesentlichen so geschrieben wird, wie man spricht. Demgegenüber ist diese Abbildung in anderen Sprachen, wie Englisch oder Französisch, ein aufwendiger Prozeß, der unter Hinzuziehung großer Referenzlexika bzw. eines komplexen Regelwerkes oder neuronalen Netzes abläuft.

Die Implementierung dieser Abbildungsmechanismen ist auf modernen PCs mit ihren großen Speichern und höchstleistungsfähigen Prozessoren unkritisch, stellt aber für Telekommunikations-Endgeräte oder Datenendgerät vom Low-Cost-Typ heute noch ein ernsthaftes praktisches Problem dar. Daher werden kleine Endgeräte bis heute mit einer sprecherabhängigen Spracherkennung ausgestattet. Allenfalls sind derzeit Systeme realisierbar, bei denen eine Erweiterung des Wortschatzes durch Einsprechen der neuen Worte und damit nicht mehr wirklich sprecherunabhängig erfolgt.

Zur Lösung der oben erörterten Probleme stellt die EP 1 047 046 A2 ein Verfahren nach dem Oberbegriff des Anspruchs 1 bereit. Der Einsatz von Aussprachelexika bei Spracherkennern ist bekannt, beispielsweise aus der US 6,078,885 A1.

Der Erfindung liegt die Aufgabe zugrunde, ein verbessertes Verfahren dieser Art anzugeben, bei dem in besonders effizienter und schneller sowie für den Nutzer einfacher Weise eine für ihn geeignete Spracherkennungsvariante realisiert wird. Weiterhin soll eine zur Durchführung dieses Verfahrens geeignete Anordnung angegeben werden.

Diese Aufgabe wird hinsichtlich ihres Verfahrensaspektes durch ein Verfahren mit den Merkmalen des Anspruchs 1 und hinsichtlich ihres Vorrichtungsaspektes durch eine Anordnung mit den Merkmalen des Anspruchs 6 gelöst.

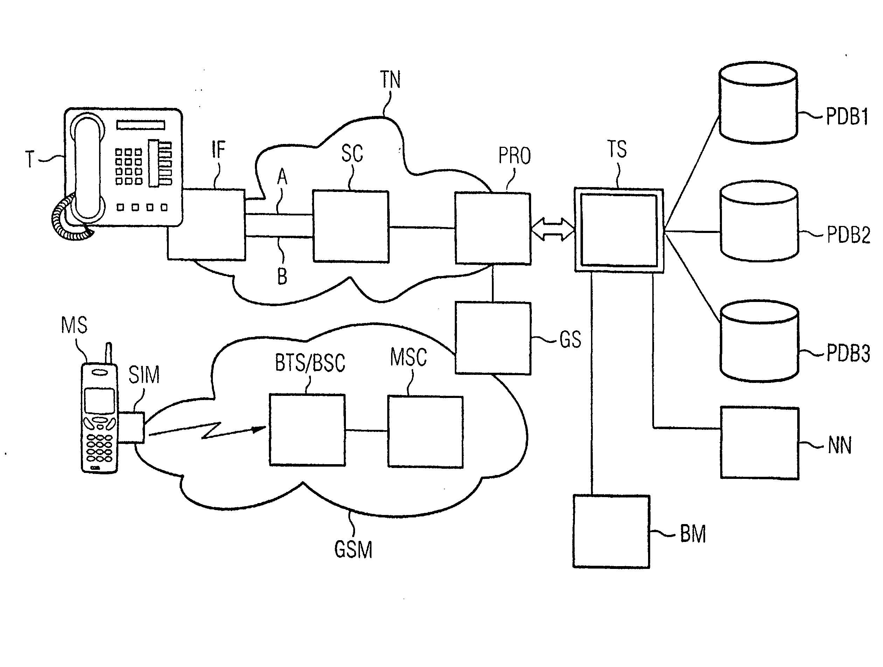

Die Erfindung geht von dem wesentlichen Gedanken aus, die Abbildung eines Textes in eine phonetische Transkription für ein an ein Telekommunikations- bzw. Datennetz angeschlossenes einfaches Endgerät mindestens in ihren wesentlichen Teilen auf einen Server im Netz zu verlagern.

Dies ermöglicht in vorteilhafter Weise eine Entlastung des Endgerätes von Verarbeitungsaufwand und die Vorhaltung von hochgradig speicherplatzaufwendigen Verarbeitungsmitteln-beispielsweise großen Referenzlexika, eines hochentwickelten neuronalen Netzes o. ä. - unabhängig von der Speicherausstattung des Endgerätes. Es können also sehr große Referenzlexika benutzt und vorteilhafterweise auch zentral gepflegt und erweitert werden, in denen eine Vielzahl von Aussprachevarianten vermerkt werden kann. Für Worte, die nicht in einem Referenzlexikon abgelegt sind, lassen sich auf einem entsprechend leistungsfähigen Server komplexe und damit verarbeitungsaufwendige Regelwerke bzw. neuronale Netze zur Abbildung anwenden. Auch bezüglich derartiger Verfahren ermöglicht die Implementierung auf einem zentralen Server eine einfache und sofort für alle Benutzer am Netz vorteilhaft zugreifbare ErWeiterung und Aktualisierung. Die ständige Verfügbarkeit der bestmöglichen Abbildungs-Ressourcen auf dem Server ergibt für die Benutzer stets die beim jeweiligen Stand der Technik bestmöglichen Transkriptionsresultate.

Gemäß der Erfindung erfolgt die phonetische Transkription unter Zugriff auf eine dem Server zugeordnete Aussprachelexikon-Datenbasis, in anderen Ausführungen unter Nutzung eines beim Server implementierten neuronalen Netzes oder anderen komplexen Verarbeitungs-Regelwerkes. Auch eine Kombination dieser Ausführungen ist sinnvoll.

Weiterhin erfolgt die phonetische Transkription in Abhängigkeit von einer Kennung des Endgerätes oder einer über das Endgerät übertragenen Benutzer-Kennung in einer spezifischen, beispielsweise dialekt- oder aussprachetypischen, Art und Weise. Hierzu wird insbesondere auf in einem großen Aussprachelexikon abgelegte Aussprachevarianten und/oder auf eines einer Mehrzahl verschiedener Aussprachelexika zugegriffen bzw. eine Mehrzahl von für Dialekte oder systematische Aus-Aussprachevarianten gebildeten neuronalen Netzen o. ä. herangezogen.

In einer wirtschaftlich besonders interessanten Variante wird das vorgeschlagene Verfahren als Dienst einer Telekommunikationsgesellschaft bzw. eines Dienstanbieters realisiert und als solcher den Benutzern insbesondere gegen Entgelt, fallweise aber auch als kostenloser Service, angeboten.

Je nach konkreter Ausführung des Telekommunikations- bzw. Datennetzes und des zugehörigen Endgerätes werden jeweils bevorzugt die höchstentwickelten verfügbaren Ressourcen für die Übertragung der eingegeben neuen Worte zum Server genutzt. Bei einem an ein Mobilfunknetz nach dem GSM-Standard angeschlossenen herkömmlichen Mobiltelefon erfolgt die Übertragung bevorzugt als Text-Kurznachricht per SMS. Bei einem WAP-fähigen Mobiltelefon wird bevorzugt als Textnachricht nach dem WAP-Standard versandt. Für künftige Mobilfunkstandards werden deren Protokolle entsprechende Möglichkeiten bieten - insbesondere wird für ein UMTS-Netz die Übertragung mittels eines StandardStandard-Internetprotokolls (HTTP) möglich sein.

Bei einem an ein ISDN-Netz angeschlossenes Festnetztelefon erfolgt die Übertragung über einen Datenkanal des ISDN-Netzes. Die Eingabe erfolgt hier bevorzugt (wie beim Mobiltelefon) über eine alphanumerische Tastatur oder per MFV.

Vorteile und Zweckmäßigkeiten der Erfindung ergeben sich im übrigen aus den Unteransprüchen sowie der nachfolgenden Beschreibung eines bevorzugten Ausführungsbeispiels anhand der Figur.

Diese zeigt - in einer synoptischen Darstellung, die aber bei Bestehen der wirtschaftlichen Voraussetzungen auch technisch realisierbar ist - bevorzugte Ausführungen der Erfindung auf einem ISDN-Festnetztelefon T und einem GSM-Mobiltelefon MS, die an ein leitungsgebundenes Telefonnetz TN bzw. ein Mobilfunknetz GSM angeschlossen sind, im Zusammenwirken mit einem Transkriptions-Server -Server TS, der beiden Kommunikationsnetzen TN und GSM gemeinsam zugeordnet ist. Das Festnetztelefon T und das Mobiltelefon MS stehen über eine ISDN-Telefonleitung ISDN bzw. eine (nicht gesondert bezeichnete) Luftschnittstelle sowie eine Basisstation BTS/BSC jeweils mit einer Vermittlungsstelle SC bzw. MSC ihres Netzes in Verbindung. Über diese wird direkt (beim Festnetz) bzw. indirekt über einen zusätzlichen Gateway-Server GS eine Verbindung zu einem gemeinsamen Verwaltungs- und Dienstzentrum PRO eines Dienstanbieters hergestellt, der sowohl im Festnetz TN als auch im Mobilfunknetz GSM einen Transkriptionsdienst als gebührenpflichtigen Dienst anbietet.

Dem Transkriptions-Server -Server TS sind mehrere Aussprachelexikon-Datenbasen PDB1 bis PDB3 sowie (schematisch in Gestalt von zwei Funktionsblöcken dargestellt) sowie ein neuronales Netz NN zur Verarbeitung von nicht in den Aussprachelexikon-Datenbasen PDB1 bis PDB3 enthaltenen neuen Worten zugeordnet. Weiterhin ist dem Transkriptions-Server -Server TS eine Vergebührungseinrichtung BM zur Vergebührung einer Nutzung des Transkriptionsdienstes zugeordnet.

Die Aussprachelexikon-Datenbasen -Datenbasen PDB1 bis PDB3 enthalten landessprach- bzw. dialektbezogene Referenzlexika, die auf bestimmte Herkunftsländer bzw. -regionen der Benutzer des Festnetzes TN bzw. des Mobilfunknetzes GSM zugeschnitten sind. Die jeweiligen Herkunftsorte werden im Festnetz anhand der Ortskennzahl des angeschlossenen Telefons T und im Mobilfunknetz anhand der Eintragungen in einer SIM-Karte SIM (im Zusammenwirken mit einem - hier nicht gezeigten - Home Location Register) identifiziert.

Als Mittel zur Texteingabe weisen beide Endgeräte T und MS in einer zumindest bei Mobiltelefonen üblichen Weise eine alphanumerische Tastatur auf. Es versteht sich, daß an deren Stelle ein Touch-Screen oder eine andere Eingabeeinrichtung für alphabetische Zeichen treten kann. Beim Festnetztelefon T ist eine ISDN-Schnittstelleneinrichtung IF eingebaut, die in der Figur lediglich symbolisch als gesonderter Block gezeigt ist. Die ISDN-Leitung zwischen dem Festnetztelefon T und der zugehörigen Vermittlungsstelle SC hat in bekannter Weise einen Sprachkanal A und einen unabhängigen Datenkanal B.

Zur Erläuterung der Funktionsweise dieser Anordnung wird angenommen, das Mobiltelefon sei mit einer Basissoftware zur sprecherunabhängigen Spracherkennung ausgestattet, beinhalte jedoch als zugehörigen Wortschatz bei Auslieferung zunächst nur die Ziffern zum Wählen und die üblichen Steuerbefehle. Zum Zwecke der Nutzung der Spracherkennung zum Anwählen von Gesprächspartnern trägt der Benutzer deren Namen in ein Telefonbuch seines Mobiltelefons ein. Aufgrund dieses Eintrages kann später durch Einsprechen des entsprechenden Namens ein Anwählen des gewünschten Gesprächspartners ohne Tastenbetätigungen erfolgen. Zunächst muß jedoch das Spracherkennungssystem phonetische Transkriptionen der ausgewählten Namen bekommen.

Dazu wird auf der Tastatur des Mobiltelefons der jeweilige Name eingegeben und über die zwischengeschalteten Funktionsblöcke an das Verwaltungs- und Dienstzentrum PRO des Providers und damit den dort angebundenen Transkriptions-Server -Server TS übertragen. Dieser sucht zunächst in derjenigen der Aussprachelexikon-Datenbasis PDB1 bis PDB3, die dem Herkunftsort des Nutzers des Mobiltelefons zugeordnet ist, nach dem entsprechenden Namen. Ist diese Suche erfolglos, werden entweder die weiteren Aussprachelexikon-Datenbasen -Datenbasen abgesucht, oder es wird einer der weiteren verfügbaren Transkriptionsmechanismen, nämlich das neuronale Netz NN für die Generierung der phonetischen Transkription eingesetzt.

Binnen kürzester Zeit liefert der Dienst dann eine phonetische Transkription des eingegebenen Namens als Ergebnis und schickt dieses wieder an das Mobiltelefon MS zurück. Dort werden die einzelnen Phoneme in weitere Untereinheiten aufgeteilt und als HMM-Zustände in einen (nicht dargestellten) Erkennungs-Suchraum eingebaut. Der neue Name steht dem Benutzer dann in hoher Qualität für künftige Spracheingaben zur Verfügung.

In ähnlicher Weise kann die Eintragung neuer Namen oder anderer Worte grundsätzlich auch beim Festnetztelefon T erfolgen. Der per alphanumerischer Tastatur eingegebene Name wird jeweils über die Datenleitung B des ISDN-Netzes ISDN weitergegeben, und diese wird auch für die "Rückmeldung" der phonetischen Transkription genutzt, so daß die Sprachleitung in diese Vorgänge nicht involviert ist. Anstelle eines im Telefon T implementierten Erkennungs-Suchraumes etc. können auch dem Telefon extern zugeordnete Spracherkennungseinrichtungen für den beim Endgerät liegenden Teil der Initialisierung und Nutzung des Spracherkennungssystems genutzt werden. Die Ausführung der Erfindung ist nicht auf dieses Beispiel beschränkt, sondern im Rahmen der Ansprüche auch in einer Vielzahl von Abwandlungen möglich, die im Rahmen fachgemäßen Handelns liegen.

## Patentansprüche

1. Verfahren zur sprecherunabhängigen Spracherkennung für ein Telekommunikations- bzw. Datenendgerät (MS, T) in einem Telekommunikations- bzw. Datennetz (GSM, TN), wobei das Endgerät gesprochene Worte aufnimmt und als geschriebene Worte ausgibt und/oder intern zu Steuerzwecken nutzt sowie am Endgerät neue Worte zur Wortschatzerweiterung als geschriebene Worte zum Zwecke der Erstellung einer phonetischen Transkription eingegeben werden können, wobei
die geschriebenen neuen Worte vom Endgerät über eine Daten-übertragungsstrecke (B) des Telekommunikations- bzw. Datennetzes zu einem zentralen Server (TS) übertragen werden, in dem zentralen Server eine Abbildung der Worte in eine phonetische Transkription vorgenommen wird,
die phonetische Transkription über eine Datenübertragungsstrecke des Telekommunikations- bzw. Datennetzes zum Endgerät zurückübertragen und
die phonetische Transkription von diesem empfangen und in diesem gespeichert wird, **dadurch gekennzeichnet,daß**
die Abbildung in die phonetische Transkription in Abhängigkeit von einer Kennung des Endgerätes unter Zugriff auf eines einer Mehrzahl von Aussprachelexika in einer dem Server zugeordneten Aussprachelexikon-Datenbasis (PDB1 bis PDB3) bzw. ebenfalls in Abhängigkeit einer Kennung des Endgerätes unter Nutzung eines einer Mehrzahl von neuronalen Netzen ausgeführt wird.

2. Verfahren nach Anspruch 1,
**dadurch gekennzeichnet,daß**
die Abbildung in die phonetische Transkription unter Nutzung eines in dem Server implementierten neuronalen Netzes (NN) ausgeführt wird.

3. Verfahren nach einem der vorangehenden Ansprüche,
**dadurch gekennzeichnet, daß**
die Abbildung in die phonetische Transkription als eigenständiger Dienst in dem Telekommunikations- bzw. Datennetz (GSM, TN) organisiert ist.

4. Verfahren nach einem der vorangehenden Ansprüche,
**dadurch gekennzeichnet, daß**
die Übertragung von und zu einem Mobilfunk-Endgerät (MS) als Kurznachricht oder über das WAP über ein Mobilfunknetz (GSM), insbesondere unter Einbeziehung einer Verbindung zu einem IP-Netz, erfolgt.

5. Verfahren nach einem der Ansprüche 1 bis 4,
**dadurch gekennzeichnet, daß**
die Übertragung von und zu einem Festnetztelefon (T) über einen ISDN-Datenkanal (B) eines ISDN-Festnetzes (TN) erfolgt.

6. Anordnung, angepaßt zur Durchführung jedes einzelmen schrittes eines Verfahrens nach einem der vorangehenden Ansprüche, mit
einer Mehrzahl von an das Telekommunikations- bzw. Datennetz angeschlossenen Endgeräten (MS, T) und
einem an eine Dienstzentrale (PRO) des Telekommunikations-bzw. Datennetzes (GSM, TN) angeschlossenen Server (TS), der eine Aussprachelexikon-Datenbasis (PDB1 bis PDB3) mit einer Mehzahl von in Abhängigkeit von Kennungen der Endgeräte zugreifbaren Aussprachelexika und/oder eine Mehzahl von neuronalen Netzen (NH), ebenfalls in Abhängigkeit von Kennungen der Endgeräte zugreifbar, (PDB1 bis PDB3, NN, HMM) zur Abbildung der an einem der Endgeräte eingegeben neuen Worte in eine phonetische Transkription aufweist.

7. Anordnung nach Anspruch 6,
**gekennzeichnet durch**
eine dem Server zugeordnete Vergebührungseinrichtung (BM) zur Vergebührung der Abbildung in die phonetische Transkription als Dienst.

8. Anordnung nach Anspruch 6 oder 7,
**dadurch gekennzeichnet, daß**
mindestens ein Teil der angeschlossenen Endgeräte als Mobilfunk-Endgeräte (MS) mit Mitteln zur Aussendung einer Text-Kurznachricht per SMS oder einer Textnachricht über ein Internet-Protoko31, insbesondere das WAP, ausgebildet ist.

9. Anordnung nach einem Ansprüche 6 bis 8,
**dadurch gekennzeichnet, daß**
mindestens ein Teil der angeschlossenen Endgeräte als Festnetztelefon (T) mit Mitteln zur Texteingabe und -übertragung, insbesondere einer ISDN-Schnittstelleneinrichtung (IF), ausgebildet ist.

## Claims

1. Method for speaker-independent voice recognition for a telecommunications and data terminal (MS, T) in a telecommunications and data network (GSM, TN), where the terminal records spoken words and outputs them as written words and/or uses them internally for control purposes, and also new words for extending a vocabulary can be input on the terminal as written words for the purpose of producing a phonetic transcription, where the written new words are transmitted from the terminal to a central server (TS) via a data transmission link (B) in the telecommunications and data network, the central server maps the words into a phonetic transcription, the phonetic transcription is transmitted back to the terminal via a data transmission link in the telecommunications and data network, and the phonetic transcription is received by the terminal and is stored therein,
**characterized in that**
mapping into the phonetic transcription is performed on the basis of an identifier for the terminal while accessing one of a plurality of pronunciation lexicons in a pronunciation-lexicon database (PDB1 to PDB3) associated with the server or, likewise on the basis of an identifier for the terminal, using one of a plurality of neural networks.

2. Method according to Claim 1,
**characterized in that**
the mapping into the phonetic transcription is performed using a neural network (NN) implemented in the server.

3. Method according to one of the preceding claims,
**characterized in that**
the mapping into the phonetic transcription is organized as an independent service in the telecommunications and data network (GSM, TN).

4. Method according to one of the preceding claims,
**characterized in that**
transmission from and to a mobile radio terminal (MS) is effected in the form of a short message or using the WAP over a mobile radio network (GSM), particularly with the inclusion of a connection to an IP network.

5. Method according to one of Claims 1 to 4,
**characterized in that**
transmission from and to a landline telephone (T) is effected using an ISDN data channel (B) in an ISDN landline network (TN).

6. Arrangement suitable for carrying out each individual step of a method according to one of the preceding claims, having a plurality of terminals (MS, T) connected to the telecommunications and data network, and a server (TS) which is connected to a service centre (PRO) in the telecommunications and data network (GSM, TN) and has a pronunciation-lexicon database (PDB1 to PDB3), containing a plurality of pronunciation lexicons which can be accessed on the basis of identifiers for the terminals, and/or a plurality of neural networks (NN), which can likewise be accessed on the basis of identifiers for the terminals, [lacuna] (PDB1 to PDB3, NN, HMM) for mapping the new words input on one of the terminals into a phonetic transcription.

7. Arrangement according to Claim 6,
**characterized by**
a billing device (BM) associated with the server for billing for the mapping into the phonetic transcription as a service.

8. Arrangement according to Claim 6 or 7,
**characterized in that**
at least some of the connected terminals are in the form of mobile radio terminals (MS) having means for transmitting a text short message using SMS or a text message using an Internet protocol, particularly the WAP.

9. Arrangement according to one of Claims 6 to 8,
**characterized in that**
at least some of the connected terminals are in the form of landline telephones (T) having means for text input and transmission, particularly an ISDN interface device (IF).

## Revendications

1. Procédé de reconnaissance de la parole indépendamment du locuteur destiné à un terminal de télécommunication et/ou à un terminal de données (MS, T) dans un réseau de télécommunication et, respectivement, dans un réseau de transmission de données (GSM, TN), le terminal recevant des mots prononcés et les restituant et/ou les utilisant intérieurement à des fins de commande sous forme de mots écrits, et des mots nouveaux pouvant être entrés sur le terminal, sous forme de mots écrits, en vue de produire une transcription phonétique, pour procéder à une extension du vocabulaire,
les nouveaux mots écrits étant transmis par le terminal, par l'intermédiaire d'une ligne de transmission de données (B) du réseau de télécommunication ou, respectivement, du réseau de transmission de données, à un serveur central (TS),
une reproduction des mots en une transcription phonétique étant exécutée dans le serveur central,
la transcription phonétique étant renvoyée au terminal, par l'intermédiaire d'une ligne de transmission de données du réseau de télécommunication ou, respectivement, du réseau de transmission de données et
la transcription phonétique étant reçue par le terminal et mémorisée dans le terminal,
**caractérisé par le fait**
**que** la reproduction dans la transcription phonétique est exécutée en fonction d'une identification du terminal après accès à l'un d'une pluralité de lexiques de prononciation dans une base de données (PBD1 à PDB3) à lexiques de prononciation affectée au serveur ou, également en fonction d'une identification du terminal, en faisant appel à l'un d'une pluralité de réseaux neuronaux.

2. Procédé selon la revendication 1
**caractérisé par le fait**
**que** la reproduction dans la transcription phonétique est exécutée en faisant appel à un réseau neuronal (NN) implémenté dans le serveur.

3. Procédé selon l'une des revendications précédentes
**caractérisé par le fait**
**que** la reproduction dans la transcription phonétique est organisée comme service autonome dans le réseau de télécommunication ou, respectivement, dans le réseau de transmission de données (GSM, TN).

4. Procédé selon l'une des revendications précédentes
**caractérisé par le fait**
**que** la transmission en provenance d'un terminal de radio mobile (MS) ou allant vers un terminal de radio mobile (MS) se fait en tant que message court ou, par l'intermédiaire du WAP, par l'intermédiaire d'un réseau de radio mobile (GSM), notamment en ayant recours à une liaison vers un réseau lP.

5. Procédé selon l'une des revendications 1 à 4
**caractérisé par le fait**
**que** la transmission en provenance d'un téléphone de réseau fixe (T) ou allant vers un téléphone de réseau fixe (T) a lieu par l'intermédiaire d'un canal de données RNIS (B) d'un réseau RNIS fixe (TN).

6. Dispositif adapté à l'exécution de chacune des différentes étapes d'un procédé selon l'une des revendications précédentes et ayant
une pluralité de terminaux raccordés au réseau de télécommunication ou, respectivement, au réseau de transmission de données (MS, T) et
un serveur (TS) raccordé à un centre de services (PRO) du réseau de télécommunication et, respectivement, du réseau de transmission de données (MS, TN), ce serveur (TS) comportant une base de données (PDB1 à PDB3) disposant d'une pluralité de lexiques de prononciation accessibles en fonction des identifications des terminaux et/ou une pluralité de réseaux neuronaux (NN), également accessibles en fonction des identifications des terminaux en vue de la reproduction des nouveaux mots entrés dans un des terminaux en une transcription phonétique.

7. Dispositif selon la revendication 6
**caractérisé par**
un dispositif (BM) de calcul de redevances affecté au serveur et destiné au relevé de redevances de la reproduction dans la transcription phonétique en tant que service payant.

8. Dispositif selon la revendication 6 ou 7
**caractérisé par le fait que**
au moins une partie des terminaux raccordés sont conçus comme terminaux de radio mobile (MS) avec des moyens pour émettre un message texte court par SMS ou un message texte par l'intermédiaire d'un protocole Internet, notamment du WAP.

9. Dispositif selon la revendication 6 à 8
**caractérisé par le fait que**
au moins une partie des terminaux raccordés sont conçus comme téléphones de réseau fixe (T) avec des moyens pour l'entrée et la transmission de texte, notamment un dispositif interface pour le RNIS (IF).
